# EUROPÄISCHE PATENTSCHRIFT

(11) **EP 3 149 389 B1**
(45) Veröffentlichungstag und Bekanntmachung des Hinweises auf die Patenterteilung: **26.02.2020**
(21) Anmeldenummer: 15724631.5
(22) Anmeldetag: 22.05.2015
(51) Int. Cl.: F16N 39/00, B21B 27/10

(54) **VERFAHREN UND VORRICHTUNG ZUM ERZEUGEN EINES KÜHLSCHMIERSTOFFGEMISCHS, UMFORMWERK ZUM UMFORMEN VON HALBZEUGEN UND VERWENDUNG EINES KÜHLSCHMIERSTOFFGEMISCHS**
METHOD AND APPARATUS FOR PRODUCING A COOLING LUBRICANT MIXTURE, FORMING PLANT FOR FORMING SEMI-FINISHED PRODUCTS AND USE OF A COOLING LUBRICANT MIXTURE
PROCÉDÉ DE PRODUCTION D'UN MÉLANGE DE LUBRIFIANT RÉFRIGÉRANT, OUTIL DE FORMAGE DE PRODUITS SEMI-FINIS ET UTILISATION D'UN MÉLANGE DE LUBRIFIANT RÉFRIGÉRANT

(30) Priorität: 26.05.2014 DE 102014210037; 13.06.2014 DE 102014008394; 15.10.2014 DE 102014220940
(43) Veröffentlichungstag der Anmeldung: 05.04.2017
(73) Patentinhaber: SMS group GmbH, 40237 Düsseldorf (DE)
(72) Erfinder: REUCKER, Klaus, 57271 Hilchenbach (DE)
(74) Vertreter: Klüppel, Walter
(86) Internationale Anmeldenummer: PCT/EP2015/061389
(87) Internationale Veröffentlichungsnummer: WO 2015/181073

(56) Entgegenhaltungen:
- DE-A1-102009 056 262
- JP-A- S6 178 509
- JP-A- H09 122 733

## Beschreibung

Die Erfindung betrifft zum einen ein Verfahren zum Erzeugen eines Kühlschmierstoffgemischs zum Kühlen und Schmieren eines Arbeitsbereichs einer Vorrichtung zum Umformen von Halbzeugen, insbesondere zum Kühlen und Schmieren von Halbzeugen und Umformwerkzeugen, bei welchem das Kühlschmierstoffgemisch aus wenigstens zwei Flüssigkeiten gemischt wird und bei welchem wenigstens eine der Flüssigkeiten vor dem Vermischen mit der anderen der Flüssigkeiten vorgewärmt wird.

Die Erfindung betrifft zum anderen eine Vorrichtung zum Erzeugen eines Kühlschmierstoffgemischs, insbesondere Emulsionsanlage, zum Kühlen und Schmieren eines Arbeitsbereichs einer Vorrichtung zum Umformen von Halbzeugen mit einem Bereitstellungsbehälter zum Bereitstellen von betriebsbereitem Kühlschmierstoffgemisch, mit einem Grundölbevorratungsbehälter, mit einem Wasserbevorratungsbehälter und mit einem Auffangbehälter zum temporären Sammeln von gebrauchtem Kühlschmierstoffgemisch.

Die Erfindung betrifft des Weiteren ein Umformwerk zum Umformen von Halbzeugen, insbesondere ein Walzwerk, mit einer Vorrichtung zum Umformen der Halbzeuge und mit einer Vorrichtung zum Erzeugen eines Kühlschmierstoffgemischs.

Die Erfindung betrifft ferner die Verwendung eines Kühlschmierstoffgemischs.

Insbesondere gattungsgemäße Verfahren und Vorrichtungen, speziell auch sogenannte Emulsionsanlagen, sind aus dem Stand der Technik vielfältig bekannt und sie werden beispielsweise in Umformwerken zum Umformen von Halbzeugen, wie zum Beispiel in Walzwerken und insbesondere in Kaltwalzwerken, Aluminiumwarmwalzwerken oder dergleichen, eingesetzt, um die umzuformenden Materialien und die hierzu eingesetzten Umformwerkzeuge zu kühlen und gleichzeitig zu schmieren. Dabei finden unterschiedliche Emulsionen, welche in einem teilweise offenen Kreislaufsystem umgewälzt werden, als Kühlschmierstoffgemische Verwendung. Derartige Emulsionen bzw. Kühlschmierstoffgemische bestehen im Wesentlichen aus Wasser und darüber hinaus aus einem Grundöl in einer Menge von 1% bis 10% der Emulsion, aus Emulgatoren, aus Stabilisatoren und aus weiteren Additiven. Diese Emulsionen erfüllen eine Reihe von Aufgaben.

Einerseits setzt sich insbesondere das Grundöl in der Emulsion beispielsweise an einem Walzgut und an den umformenden Walzen ab, um in einem Walzspalt für gute Schmierbedingungen zu sorgen und eine Trennschicht zwischen dem Walzgut und den umformenden Walzen aufzubauen.

Anderseits führt insbesondere das Wasser die durch den Umform- bzw. Walzprozess entstehende Wärme ab und verhindert somit die Gefahr einer Überhitzung der umformenden Walzen bzw. von Walzgerüstbauteilen im Allgemeinen und dem Walzgut im Speziellen.

Eine weitere Aufgabe der Emulsion besteht darin, insbesondere im Arbeitsbereich bzw. im Walzspalt auftretende Verunreinigungen abzuführen. Diese Verunreinigungen können Abriebpartikel, Staubpartikel aus der Umgebung bzw. andere Partikel, aber auch durch Leckagen verursachte Hydrauliköle, Lagerschmieröle und -fette umfassen, welche etwa durch das im Arbeitsbereich bzw. in dem diesbezüglichen Gerüstbereich offene Kreislaufsystem in die Emulsion eingetragen werden.

Die bisher bekannten Verfahren und Vorrichtungen zum Erzeugen und auch zum Aufbereiten von Kühlschmierstoffgemischen bauen oftmals aufwendig bzw. arbeiten bisweilen recht uneffektiv. Dementsprechend verursachen sie zu hohen Kosten in der Herstellung, in der Unterhaltung und in der Wartung.

Beispielsweise ist aus der DE 10 2009 056 262 A1 ein Verfahren zum Walzen eines Walzguts in einem Walzgerüst beschrieben, bei welchem die Wärme des durch einen Walzvorgang erwärmten Kühlschmierstoffs zumindest teilweise an einen auf die Walzen aufzusprühenden Kühlschmierstoff übertragen wird.

Aus der JP H09 122 733 A ist eine Methode und eine Vorrichtung zum Bereitstellen eines Kühlschmierstoffs in einem Walzwerk bekannt, bei welcher gebrauchter und damit erwärmter Kühlschmierstoff in einen Sammelbehälter rückgeführt und dort gesammelt wird. Innerhalb des Sammelbehälters gelangt der rückgeführte Kühlschmierstoff über einen Überlauf in einem Mischbereich des Sammelbehälters, in welchem dem rückgeführten Kühlschmierstoff frischer Kühlschmierstoff zuführbar ist. Von dem Mischbereich des Sammelbehälters führt eine Kühlschmierstoffleitung zu den einzelnen Walzgerüsten, wobei der dort bereitgestellte Kühlschmierstoff durch Kühleinheiten bedarfsweise noch heruntergekühlt werden kann, bevor der Kühlschmierstoff letztendlich an den Walzgerüsten eingesetzt wird.

Des Weiteren ist aus der JP S61 78 509 A eine Schmierstoffkühleinrichtung eines Kaltwalzwerks bekannt, bei welcher ein gebrauchter und damit auch erwärmter Kühlschmierstoff in einen Sammeltank zur Wiederverwendung aufgefangen wird. Die in dem aufgefangenen Kühlschmierstoff enthaltene Wärme kann Kühlwasser erhitzen, welches wiederum Wärmeenergie bedarfsweise an einen dem Kaltwalzwerk zuzuführenden Kühlschmierstoff abgibt.

Der Erfindung liegt die Aufgabe zugrunde, gattungsgemäße Verfahren und Vorrichtungen derart weiterzuentwickeln, dass zumindest die vorstehend genannten Nachteile überwunden werden können.

Die Aufgabe der Erfindung wird von einem Verfahren zum Erzeugen eines Kühlschmierstoffgemischs zum Kühlen und Schmieren eines Arbeitsbereichs einer Vorrichtung zum Umformen von Halbzeugen, insbesondere zum Kühlen und Schmieren von Halbzeugen und Umformwerkzeugen, gelöst, bei welchem das Kühlschmierstoffgemisch aus wenigstens zwei Flüssigkeiten gemischt wird und bei welchem wenigstens eine der Flüssigkeiten vor dem Vermischen mit der anderen der Flüssigkeiten vorgewärmt wird, wobei erfindungsgemäß eben vor dem Vermischen dieser wenigstens zwei Flüssigkeiten zum Vorwärmen der wenigstens einen der Flüssigkeiten eine einem gebrauchten Kühlschmierstoffgemisch innewohnende Wärmeenergie zumindest teilweise an die wenigstens eine der Flüssigkeiten übertragen wird.

Dadurch, dass zumindest eine der Flüssigkeiten, aus welcher das betriebsbereite bzw. einsatzbereite Kühlschmierstoffgemisch gemischt wird, vor dem Vermischen durch die Wärmeenergie des bereits gebrauchten Kühlschmierstoffgemischs erwärmt wird, kann das Verfahren wesentlich energieeffizienter betrieben werden als bisher üblich. Bisher wurden die Flüssigkeiten zum Erzeugen eines Kühlschmierstoffgemischs stets mit einer zusätzlichen Heizeinrichtung erwärmt. Dies ist vorliegend nicht mehr oder zumindest in einem stark verringerten Maße erforderlich.

Insofern kann das Bereitstellen eines Kühlschmierstoffgemischs insbesondere an einem Arbeitsbereich einer Umformvorrichtung zum Umformen von Halbzeugen vorteilhafter vorgenommen werden.

Der Begriff "Kühlschmierstoffgemisch" beschreibt im Sinne der Erfindung jegliche Emulsionen, welche an einer materialumformenden Maschine zum Kühlen des umzuformenden Materials bzw. Halbzeugs oder Werkstücks und zum Kühlen entsprechender Umformwerkzeuge Verwendung finden. Insofern formuliert die Bezeichnung "Kühlschmierstoffgemisch" eine genau angesetzte Mischung von Emulsions-Grundöl und bevorzugt vollentsalztem Wasser.

Im Sinne der Erfindung wird zwischen dem betriebsbereiten bzw. einsatzbereiten Kühlschmierstoffgemisch, dem von dem Arbeitsbereich kommenden und damit bereits gebrauchten Kühlschmierstoffgemisch sowie den gebrauchten, aber wiederaufbereiteten Kühlschmierstoffgemisch unterschieden, wobei Letzteres wieder als betriebsbereites bzw. einsatzbereites Kühlschmierstoffgemisch verwendet werden kann.

Es versteht sich, dass je nach Anwendungsfall unterschiedlichste Kühlschmierstoffgemische bzw. Emulsionen eingesetzt werden können. Im Beispiel eines Walzwerks wird das Kühlschmierstoffgemisch etwa als Walzemulsion eingesetzt. Derartige Kühlschmierstoffgemische können sich aus verschiedenen Flüssigkeiten und sonstigen weiteren Bestandteilen zusammensetzen, um so besser an die tatsächlichen Arbeitsbedingungen angepasst zu werden.

Das für einen Walzprozess gemischte und verwendete Kühlschmierstoffgemisch hat beispielsweise eine Betriebstemperatur von ca. 50°C. Diese erhöhte Betriebstemperatur ist erforderlich, um einerseits Entmischungsvorgängen entgegenzuwirken und andererseits das Wachstum von Algen und Bakterien oder dergleichen zu verhindern oder zumindest in Grenzen zu halten.

Im Sinne der Erfindung kennzeichnet der Begriff "Flüssigkeiten" insbesondere unterschiedliche Grundöle und Wasser, welche miteinander vermischt werden, um entsprechende Kühlschmierstoffgemische hieraus zu erzeugen. Aber auch andere für ein Kühlschmierstoffgemisch erforderliche Flüssigkeiten können mittels des vorliegenden Verfahrens vorteilhaft vorgewärmt werden.

Die Begrifflichkeit "Grundöl" beschreibt in diesem Zusammenhang eines der wichtigsten Bestandteile bzw. Flüssigkeiten, aus welchen sich das vorliegende Kühlschmierstoffgemisch zusammensetzt. Das Grundöl wird hierbei auf das umzuformende Material und darüber hinaus auch auf den beispielsweise in einem Walzprozess eingesetzten Walzen- bzw. Gerüsttyp abgestimmt.

In der Regel kommen als Grundöl sehr gut ausraffinierte und insbesondere paraffinische Öle zum Einsatz.

Um insbesondere eine gute Löslichkeit dieses Grundöls mit dem Wasser zu erzielen, ist es von Vorteil, wenn zumindest das Grundöl, bevorzugt jedoch das Grundöl und das Wasser, auf eine entsprechend abgestimmte Temperatur vorgewärmt wird, insbesondere bevor das Grundöl und das Wasser in einem Mischprozess miteinander vermischt werden.

Da derartige Kühlschmierstoffgemische bzw. Grundöle und sonstige Bestandteile aus dem Stand der Technik hinlänglich bekannt sind, wird vorliegend hierauf nicht weiter eingegangen.

Die Umschreibung "eine einem gebrauchten Kühlschmierstoffgemisch innewohnende Wärmeenergie" beschreibt im Sinne der Erfindung ein Kühlschmierstoffgemisch, welches zum Kühlen eines Arbeitsbereiches einer Umformvorrichtung bereits eingesetzt wurde und in welches durch Umformarbeit und dergleichen bedingte Wärmeenergie eingetragen wurde. Bisher wurde diese in das gebrauchte Kühlschmierstoffgemisch eingetragene Wärmeenergie zum Vorwärmen insbesondere von dem Grundöl und dem Wasser, welches zum Erzeugen des Kühlschmierstoffgemischs miteinander vermischt werden, nicht genutzt, sondern meistens an die Umgebung abgegeben.

Jedenfalls sieht eine bevorzugte Verfahrensvariante vor, dass das Kühlschmierstoffgemisch aus einem Grundöl und Wasser gemischt wird, wobei die dem gebrauchten Kühlschmierstoffgemisch innewohnende Wärmeenergie zumindest teilweise an das Wasser und/oder an das Grundöl übertragen wird, wodurch das in dem Bereitstellungsbehälter vorgehaltene betriebsbereite Kühlschmierstoffgemisch verfahrenstechnisch und energetisch besonders erzeugt werden kann.

Damit sich insbesondere das Grundöl mit dem Wasser zu dem betriebsbereiten Kühlschmierstoffgemisch besonders innig vermischen kann, ist es erforderlich, dass zumindest eines dieser Flüssigkeiten auf eine hierfür günstige Temperatur erwärmt wird.

Insofern wird die Aufgabe der Erfindung auch von einer Verwendung eines Kühlschmierstoffgemischs zum Erwärmen von einem Grundöl und/oder Wasser zum Erzeugen des Kühlschmierstoffgemischs vor dem dem Vermischen des Grundöls mit dem Wasser gelöst.

Dadurch, dass das von einem Arbeitsbereich einer Umformvorrichtung kommende und damit gebrauchte und durch Umformungsenergie entsprechend erwärmte Kühlschmierstoffgemisch insbesondere zum Vorwärmen des Grundöls des Kühlschmierstoffgemischs und/oder von Wasser verwendet wird, kann das Kühlschmierstoffgemisch energetisch günstiger erzeugt werden.

Ferner ist es vorteilhaft, wenn die dem gebrauchten Kühlschmierstoffgemisch innewohnende Wärmeenergie zumindest teilweise an ein in einem Bereitstellungsbehälter vorgehaltenen betriebsbereiten Kühlschmierstoffgemisch übertragen wird. Hierdurch kann die Energieeffizienz des vorliegenden Verfahrens noch weiter erhöht werden.

Die Verfahrensvielfalt kann vorteilhaft erhöht werden, wenn Flüssigkeiten zum Mischen des Kühlschmierstoffgemischs und/oder das betriebsbereite Kühlschmierstoffgemisch selbst unterschiedlich erwärmt werden. Beispielsweise kann ein Großteil der Wärmeenergie von dem gebrauchten Kühlschmierstoffgemisch an das betriebsbereite Kühlschmierstoffgemisch übertragen werden. Oder die meiste dem gebrauchten Kühlschmierstoffgemisch innewohnende Wärmeenergie wird an das Grundöl übertragen, so dass dieses sich besonders gut in dem Wasser lösen kann.

Erfolgt eine Übertragung der dem gebrauchten Kühlschmierstoffgemisch innewohnenden Wärmeenergie nach einer Aufbereitung des gebrauchten Kühlschmierstoffgemischs, kann das gebrauchte Kühlschmierstoffgemisch wärmer und hiermit gegebenenfalls vorteilhafter aufbereitet werden. Oder das aufbereitete Kühlschmierstoffgemisch konnte durch den Aufbereitungsvorgang auf ein höheres Wärmeenergieniveau gehoben werden, wodurch zusätzliche Wärmeenergie zum Übertragen an das Grundöl und/oder das Wasser zur Verfügung steht.

Die Energiebilanz der vorliegenden Vorrichtung kann weiter verbessert werden, wenn Flüssigkeiten zum Mischen des Kühlschmierstoffgemischs und/oder das betriebsbereite Kühlschmierstoffgemisch selbst ausschließlich mittels der dem gebrauchten Kühlschmierstoffgemisch innewohnenden Wärmeenergie erwärmt wird.

Die Aufgabe der Erfindung wird von einer Vorrichtung zum Erzeugen eines Kühlschmierstoffgemischs, insbesondere von einer Emulsionsanlage, zum Kühlen und Schmieren eines Arbeitsbereichs einer Umformvorrichtung zum Umformen von Halbzeugen mit einem Bereitstellungsbehälter zum Bereitstellen des betriebsbereiten Kühlschmierstoffgemischs, mit einem Grundölbevorratungsbehälter, mit einem Wasserbevorratungsbehälter und mit einem Auffangbehälter zum temporären Sammeln von gebrauchtem Kühlschmierstoffgemisch gelöst, wobei der Auffangbehälter mit dem Bereitstellungsbehälter derart in Wirkverbindung steht, dass während der Verweildauer des den Auffangbehälter durchströmenden gebrauchten Kühlschmierstoffgemischs die dem gebrauchten Kühlschmierstoffgemisch innewohnende Wärmeenergie zumindest teilweise an das in dem Bereitstellungsbehälter befindliche betriebsbereite Kühlschmierstoffgemisch übertragbar ist, und wobei sich die Vorrichtung dadurch auszeichnet, dass der Auffangbehälter und der Grundölbevorratungsbehälter und/oder der Wasserbevorratungsbehälter derart zueinander angeordnet sind, dass die dem gebrauchten Kühlschmierstoffgemisch innewohnende Wärmeenergie an das in dem Grundölbevorratungsbehälter bevorratete Grundöl und/oder an das in dem Wasserbevorratungsbehälter bevorratete Wasser übertragbar ist.

Mittels einer derartigen Vorrichtung kann das Bereitstellen eines Kühlschmierstoffgemischs insbesondere an einem Arbeitsbereich einer Umformvorrichtung vorteilhafter vorgenommen werden. Dies ist besonders bei Energie intensiven Herstellungsanlagen, wie etwa Umformwerken und insbesondere Walzwerken oder dergleichen, vorteilhaft.

Daneben hat die vorliegende Vorrichtung bzw. Emulsionsanlage noch die Aufgaben, das gebrauchte Kühlschmierstoffgemisch zu reinigen, den gewünschten Ölgehalt in dem betriebsbereiten Kühlschmierstoffgemisch einzustellen, die gewünschten Betriebstemperaturen einzustellen bzw. zu halten sowie die erforderlichen Mengen an Kühlschmierstoffgemischen für das Walzen bereitzustellen.

Die Aufgabe wird auch von einem Umformwerk zum Umformen von Halbzeugen, insbesondere von einem Walzwerk, mit einer Umformvorrichtung zum Umformen der Halbzeuge und mit einer Vorrichtung zum Erzeugen eines Kühlschmierstoffgemischs gelöst, wobei sich das Umformwerk im Allgemeinen bzw. das Walzwerk im Speziellen durch eine Vorrichtung zum Erzeugen eines Kühlschmierstoffgemischs nach einem der hier beschriebenen Merkmale auszeichnet.

Ist das Umformwerk bzw. das Walzwerk mit der vorliegenden erfindungsgemäßen Vorrichtung ausgerüstet, kann an diesem Umformwerk bzw. an diesem Walzwerk insbesondere auch das erfindungsgemäße Verfahren eingesetzt werden, wodurch das Umformwerk bzw. das Walzwerk signifikant effektiver betrieben werden kann.

Ferner ist es hinsichtlich der vorliegenden Vorrichtung klar, dass der Auffangbehälter hierbei unterschiedlich aufgebaut sein kann, beispielsweise als Sammeleinrichtung zum temporären Sammeln des von dem Arbeitsbereich kommenden und somit gebrauchten Kühlschmierstoffgemischs und/oder lediglich als Durchleitungseinrichtung zu einer Aufbereitungseinrichtung oder dergleichen für das gebrauchte Kühlschmierstoffgemisch.

Baulich besonders einfach kann die dem gebrauchten Kühlschmierstoffgemisch innewohnende Wärmeenergie im Sinne der Erfindung übertragen werden, wenn der Auffangbehälter und der Bereitstellungsbehälter eine gemeinsame Trennwand aufweisen, durch welche hindurch die dem gebrauchten Kühlschmierstoffgemisch innewohnende Wärmeenergie an das betriebsbereite Kühlschmierstoffgemisch übertragen wird.

Insofern ist es vorteilhaft, wenn der Auffangbehälter und der Bereitstellungsbehälter gemeinsam einen Wärmeübertrager der Vorrichtung ausgestalten, mittels welchem die dem gebrauchten Kühlschmierstoffgemisch innewohnende Wärmeenergie an das betriebsbereite Kühlschmierstoffgemisch übertragen wird.

Speziell das vorliegende Verfahren kann konstruktiv sehr einfach durchgeführt werden, wenn die vorliegende Vorrichtung derart konzipiert ist, dass kumulativ oder alternativ eine Kühlschmierstoffgemisch-Leitung zum Leiten von gebrauchten Kühlschmierstoffgemisch mit dem Grundöl und/oder mit dem Wasser zum Mischen des Kühlschmierstoffgemischs in Wirkkontakt steht.

Vorteilhafterweise weist die vorliegende Vorrichtung sogleich eine Aufbereitungseinrichtung zum Filtern und Reinigen des gebrauchten Kühlschmierstoffs auf, so dass das gebrauchte Kühlschmierstoffgemisch wiederverwendet werden kann.

Eine besonders vorteilhafte Ausführungsvariante sieht diesbezüglich auch vor, dass der Auffangbehälter und der Bereitstellungsbehälter mittels einer Kühlschmierstoffgemisch-Leitung fluidisch miteinander verbunden sind, wobei in dieser Kühlschmierstoffgemisch-Leitung eine Aufbereitungseinrichtung fluidisch integriert ist, und wobei diese Kühlschmierstoffgemisch-Leitung derart mit dem Grundölbevorratungsbehälter und/oder mit dem Wasserbevorratungsbehälter wirkverbunden ist, dass die dem gebrauchten und/oder dem aufbereiteten Kühlschmierstoffgemisch innewohnende Wärmeenergie zumindest teilweise an das in dem Grundölbevorratungsbehälter bevorratete Grundöl und/oder an das in dem Wasserbevorratungsbehälter bevorratete Wasser übertragen wird. Speziell hierdurch kann das vorliegende Verfahren konstruktiv sehr einfach durchgeführt werden.

Konstruktiv sehr einfach kann die dem gebrauchten Kühlschmierstoffgemisch innewohnende Wärmeenergie an das Grundöl bzw. das Wasser übertragen werden, wenn die Kühlschmierstoffgemisch-Leitung durch den Grundölbevorratungsbehälter und/oder den Wasserbevorratungsbehälter hindurch geführt ist.

Insofern ist es zweckmäßig, wenn die Kühlschmierstoffgemisch-Leitung und der Grundölbevorratungsbehälter und/oder der Wasserbevorratungsbehälter zumindest noch einen weiteren Wärmeübertrager der Vorrichtung ausgestalten, mittels welchem die dem gebrauchten Kühlschmierstoffgemisch innewohnende Wärmeenergie an das Grundöl und/oder an das Wasser übertragbar ist.

Besonders zweckmäßig ist es, wenn der Grundölbevorratungsbehälter und/oder der Wasserbevorratungsbehälter fluidisch zwischen der Aufbereitungseinrichtung und dem Bereitstellungsbehälter angeordnet ist, wodurch nämlich das gebrauchte Kühlschmierstoffgemisch an der Aufbereitungseinrichtung wärmer und somit auch viskoser zur Verfügung stehen kann und ferner das Kühlschmierstoffgemisch während des Aufbereitungsvorgangs gegebenenfalls noch auf ein höheres Energieniveau gebracht werden kann, bevor die Wärmeenergie des Kühlschmierstoffgemischs an das Grundöl und/oder das Wasser übertragen wird.

Es versteht sich, dass eine Übertragung der dem gebrauchten Kühlschmierstoffgemisch innewohnenden Wärmeenergie vor einer Aufbereitung des gebrauchten Kühlschmierstoffgemischs erfolgen kann, wobei in diesem Fall der Grundölbevorratungsbehälter und/oder der Wasserbevorratungsbehälter fluidisch vor der Aufbereitungseinrichtung angeordnet ist.

Insbesondere am Beginn eines Umformprozesses ist es vorteilhaft, wenn die Vorrichtung zudem noch eine Heiz- und/oder Kühleinrichtung zum Heizen oder Kühlen des sich in dem Bereitstellungsbehälter befindlichen betriebsbereiten Kühlschmierstoffgemischs umfasst, also zu einem Zeitpunkt, in welchem womöglich noch nicht genügend oder gar kein gebrauchtes Kühlschmierstoffgemisch zur Wärmeabgabe zur Verfügung steht.

Diesbezüglich erscheint es vorteilhaft, wenn die Vorrichtung einen weiteren Kühlschmierstoffgemisch-Heiz- und/oder Kühlkreislauf aufweist, mittels welchem das in dem Bereitstellungsbehälter befindliche betriebsbereite Kühlschmierstoffgemisch durch die Heiz- und/oder Kühleinrichtung hindurch umwälzbar ist.

Weiter ist es auch unabhängig von den übrigen Merkmalen der Erfindung vorteilhaft, wenn die Komponenten der Vorrichtung derart zueinander angeordnet sind, dass eine durch von den Komponenten der Vorrichtung abgegebene Abwärmeenergie an das Kühlschmierstoffgemisch und/oder Bestandteile hiervon übertragbar ist, so dass das Kühlschmierstoffgemisch und/oder die Bestandteile hiervon erwärmt werden. Auch hierdurch kann die Vorrichtung und ein Umformwerk energieeffizienter betrieben werden.

Beispielsweise grenzen die einzelnen Behälter zur Aufnahme von erwärmten Flüssigkeiten mit ihren Behälterwänden unmittelbar aneinander an, so dass hinsichtlich der vorhandenen Behälter eine Oberflächenreduzierung gegenüber der Umgebung erzielt werden kann.

Hierbei können insbesondere der Bereitstellungsbehälter, der Auffangbehälter, der Grundölbevorratungsbehälter und/oder der Wasserbevorratungsbehälter als in Wirkverbindung stehende Kammern einer einzigen übergeordneten Behältniseinrichtung ausgestaltet sein, so dass eine Wärmeenergie kumulativ oder alternativ intensiviert werden kann.

Ferner kann diese einzige Behältniseinrichtung gegebenenfalls noch weitere Kammern zur verfahrenstechnischen Behandlung des Kühlschmierstoffgemischs umfassen, welche ebenfalls in Wirkverbindung mit wenigstens einer der übrigen Kammern stehen.

Eine derartige Konstellation ist auch ohne die übrigen Merkmale der Erfindung vorteilhaft.

Durch die vorstehend beschriebenen Maßnahmen kann ein Wärmeenergiefluss innerhalb der Vorrichtung gezielt gelenkt und somit effektiver genutzt werden.

Weist die Vorrichtung zusätzlich noch drehzahlgeregelte Pumpen zur bedarfsgerechten Förderung auf, kann die Vorrichtung noch Energie effektiver betrieben werden. Hierdurch wird vermieden, dass zu viel geförderte Flüssigkeiten nicht unnötig über Überdruckventile oder dergleichen abströmen müssen.

Nach einem weiteren Aspekt der Erfindung zeichnet sich die vorliegende Vorrichtung bzw. Emulsionsanlage durch eine extrem platzsparende Bauweise aus.

In diesem Zusammenhang ist es vorteilhaft, wenn die Vorrichtung eine Containereinheit mit zumindest zwei Etagen aufweist, so dass die Komponenten der Vorrichtung auf wenigstens zwei Ebenen angeordnet sind. Hierdurch kann der erforderliche Bauraum von der Fläche zum Teil in die ansonsten ungenutzte Höhe verlagert werden, wodurch eine nicht unerhebliche Grundfläche eingespart werden kann, sind die Merkmale bezüglich dieser Containereinheit auch ohne die übrigen Merkmale der vorliegenden Erfindung vorteilhaft.

Besonders vorteilhaft ist es hierbei, wenn die Containereinheit transportbereit und gegebenenfalls mit vormontierten Komponenten der Vorrichtung werksseitig bereitgestellt ist.

Vorteilhafterweise kann durch die kompakte Containereinheit der Verrohrungsaufwand signifikant reduziert werden, wodurch eine Oberflächenreduzierung erzielt wird und hierdurch wiederum ein Wärmeverlust an die Umgebung weiter reduziert werden kann.

Des Weiteren können hierdurch die Förderwege der Flüssigkeiten reduziert werden, wodurch niedrigere Druckverluste erzielbar sind.

Nach einem anderen Aspekt der Erfindung ist es vorteilhaft, wenn die Vorrichtung einen modularen Aufbau aufweist. Durch einen derartigen modularen Aufbau kann die vorliegende Vorrichtung zumindest teilweise und bevorzugt zur Gänze herstellungsseitig vormontiert, geprüft, angeliefert und an entsprechend hierfür vorgesehenen Anschlusseinrichtungen der Umformvorrichtung zum Umformen der Halbzeuge montiert sowie anschließend unmittelbar in Betrieb genommen werden, so dass sich hierdurch bedingt die Endmontage vor Ort signifikant verkürzt und somit eine dementsprechend rasche Inbetriebnahme erzielt wird.

Die vorliegende Vorrichtung kann somit insbesondere nach dem Baukastenprinzip zusammengestellt und -gebaut werden.

Der modulare Aufbau der Vorrichtung kann insbesondere im Zusammenhang mit der kompakt bauenden Containereinheit realisiert werden. Eine weitere signifikante Verbesserung einer Vorrichtung zum Erzeugen eines Kühlschmierstoffgemischs kann erzielt werden, wenn die Vorrichtung eine Vielzahl an Modulplätzen aufweist, an welchen die Komponenten der Vorrichtung passgenau montierbar sind. Allein hierdurch kann eine gattungsgemäße Vorrichtung vorteilhaft weiter entwickelt werden, so dass diese Merkmalskombination bereits ohne die übrigen Merkmale der Erfindung vorteilhaft ist.

An dieser Stelle sei noch erwähnt, dass mit der vorliegenden Vorrichtung die Herstellungskosten um ca. 20% gegenüber herkömmlichen Vorrichtungen reduziert werden können.

Ferner können mit der vorliegenden Vorrichtung und dem erfindungsgemäßen Verfahren gegenüber dem Stand der Technik bis zu 45% an elektrischer Energie eingespart werden.

Des Weiteren kann die vorliegende Vorrichtung noch über Reinigungsgeräte, welche zum Beispiel in Form von Filtern, Magnetabscheidern, Skimmern oder ähnlichem ausgeführt sein können, über eine Vielzahl an Zulauf- und Rücklaufrohren zum und vom Walzwerk, Rühr- bzw. Mischeinrichtungen, Pumpen, Ventile, Heiz- und Kühleinrichtungen sowie Nachfülleinrichtungen für Grundöl, Wasser usw. verfügen.

Außerdem kann sich die vorliegende Erfindung noch durch folgende Aspekte und Merkmale auszeichnen:
Die Behältervolumina von Betriebs-, Grundöl- und Wasserbehälter sind hinsichtlich des jeweiligen Verbrauchs der Flüssigkeiten bzw. Fluide im Betriebsfall und hinsichtlich der Vermeidung von unnötig großem Speichervolumen optimiert.

Im Falle der Versorgung einer insbesondere fünfgerüstigen Tandemstrasse mit einem erforderlichen Kühlschmierstoffmittel für einen Conti-Betrieb wird zunächst abhängig von den Erfordernissen des Walzspalts die erforderliche Betriebsbehältergröße ermittelt, um den erforderlichen Notwendigkeiten bezüglich einer Reinigung und einer Entgasung des Kühlschmierstoffgemisches gerecht zu werden.

Das beispielsweise bei einem Walzprozess verbrauchte Grundöl muss dem Kühlschmierstoffgemisch wieder in Form von frischem Grundöl beigemischt werden.

Zur kurzfristigen Deckung dieses Bedarfs ist die vorliegende Vorrichtung also mit dem Grundölbevorratungsbehälter zur Aufnahme, Temperierung sowie Vorratshaltung des Grundöls versehen.

Das Volumen dieses Grundölbevorratungsbehälters ist bevorzugt auf den zu erwarteten Verbrauch optimiert, der sowohl aufgrund von Erfahrungswerten einen sicheren Dauerbetrieb ohne Unterbrechungen für einen Zeitraum von ca. 220 bis 450 Betriebsstunden ohne eine Nachfüllung gewährleistet.

Zur Gewährleistung einer optimalen Durchmischung und zum Nachsetzen des verbrauchten Grundöles wird dieses in genau dosierten Mengen während des Betriebes der Vorrichtung beispielsweise in Saugleitungen von Vorlaufpumpen injiziert.

Die durch den Pumpvorgang entstehenden Verwirbelungen und Scherungen sorgen für eine optimale und dauerhafte Vermischung der Komponenten bzw. Bestandteile des Kühlschmierstoffgemischs.

Zur Vermeidung von Störungen des Walzprozesses durch Überschmierung und zur Reduzierung des spezifischen Verbrauchs an Grundöl erfolgt die Nachsetzung bevorzugt durch eine entsprechend geeignete Dosierpumpe.

Das beim Walzprozess verbrauchte bevorzugt vollentsalzte Wasser muss dem Kühlschmierstoffgemisch wieder in Form von frischem Wasser beigemischt werden.

Zur kurzfristigen Deckung dieses Bedarfs ist die vorliegende Vorrichtung mit dem Wasserbevorratungsbehälter zur Aufnahme, Temperierung und Vorratshaltung des Wassers versehen.

Das Volumen dieses Wasserbevorratungsbehälters ist idealerweise auf den zu erwarteten Verbrauch optimiert, der sowohl aufgrund von Erfahrungswerten einen sicheren Dauerbetrieb ohne Unterbrechungen gewährleistet.

Aufgrund des erforderlichen Nachsetzvolumens von durchschnittlich ca. 5 m³ pro Stunde ist eine intermittierende Nachfüllung aus einem vorhandenen Werksnetz möglich.

Zur kurzfristigen Auffrischung des Kühlschmierstoffgemischs, etwa durch Austausch einer Teilmenge, reicht ein vorhandenes Speichervolumen von 30 m³ aus.

Zur Gewährleistung einer optimalen Durchmischung und zum Nachsetzen des verbrauchten bevorzugt vollentsalzten Wassers wird dieses in genau bemessener Menge während des Betriebes durch eine Saugleitung einer entsprechend ausgestalteten Filterpumpen eingemischt.

Die durch den Pumpvorgang entstehenden Verwirbelungen und Scherungen sorgen auch hier für eine optimale und dauerhafte Vermischung der Komponenten.

Zur Vermeidung von Störungen des Walzprozesses aufgrund einer Mangelschmierung und zur Reduzierung des spezifischen Verbrauchs an bevorzugt vollentsalztem Wasser erfolgt die Nachsetzung volumengesteuert bevorzugt in kleinen Mengen.

Die vorliegende Vorrichtung kann weiterhin dadurch gekennzeichnet sein, dass die Kühlschmierstoffgemisch- bzw. Emulsionspflege und -aufbereitung in dem eigentlichen Betriebsbehälter durch spezielle Strömungsführung optimiert ist.

Die im Walzprozess geforderten Kühlschmierstoffgemisch- bzw. Emulsionsmengen variieren ständig zwischen 0 und 100 %.

Diese Schwankungen müssen insbesondere durch den Bereitstellungsbehälter und seinen nachgeschalteten Regenerationseinrichtungen, wie etwa Magnetabscheider, Vakuumfilter, Heizer, Kühler, Skimmereinrichtung oder dergleichen verarbeitet werden, um die Reinigung, Temperierung, Tröpfchengrößenverteilung, Fremdölabscheidung usw. entsprechend den Erfordernissen zu gewährleisten.

Das vom Walzprozess beeinträchtigte und damit gebrauchte Kühlschmierstoffgemisch gelangt entweder durch eine Rückpumpstation oder direkt durch eine Rücklaufleitung in einen Auffangbehälter bzw. in eine Schmutzkammer des Bereitstellungsbehälters.

Dieser Auffangbehälter bzw. diese Schmutzkammer, dessen bzw. deren Größe bevorzugt ca. 15 % des Bereitstellungsbehälters beträgt, besteht bevorzugt nur aus der gemeinsamen Trennwand bzw. aus einem entsprechend ausgebildeten Trennblech, welche bzw. welches bis zu einer Füllhöhe von ca. 60 % des Bereitstellungsbehälters innerhalb des Bereitstellungsbehälters aufragt.

Oberhalb dieses Auffangbehälters kann noch eine Abschöpfeinheit bzw. eine Abskimmeinheit installiert sein.

Aus diesem Auffangbehälter kann das Kühlschmierstoffgemisch bzw. die Emulsion durch Kreiselpumpen abgesaugt und den Magnetabscheidern der Magnetabscheidereinheit zugeführt werden.

Zur Optimierung einer Eisen-Abscheiderate erfolgt die Durchströmung der Magnetabscheider kontinuierlich und sie beträgt ca. 110 % der von dem Walzprozess geforderten Kühlschmierstoffgemisch- bzw. Emulsionsmenge.

Entsprechend den Erfordernissen an die Sauberkeit des Kühlschmierstoffgemischs bzw. der Emulsion kann noch ein Vakuumfilter nachgeschaltet werden, welcher aus den Magnetabscheidern gespeist wird.

Nach dem Passieren dieser Reinigungsstufen gelangt das Kühlschmierstoffgemisch in die eigentliche Reinkammer des Bereitstellungsbehälters.

Der Bereitstellungsbehälter ist demnach vorzugsweise in einer Schmutzkammer zum Aufnehmen des gebrauchten Kühlschmierstoffgemischs und in eine Reinkammer zum Aufnehmen des betriebsbereiten Kühlschmierstoffgemischs unterteilt. Die Schmutzkammer und die Reinkammer sind hierbei lediglich durch die gemeinsame Trennwand räumlich voneinander getrennt.

Zur Erreichung einer homogenen Verteilung wird idealerweise ein Verteilerrohr eingesetzt.

Zur Einstellung der Betriebstemperatur kann das betriebsbereite Kühlschmierstoffgemisch aus dem Verteilerrohr abgesaugt und mittels entsprechenden Heiz- oder Kühlgeräten auf die erforderliche Temperatur eingestellt werden.

Da nur ein Teilstrom des vom Walzprozess zurückkehrenden Kühlschmierstoffgemischs temperiert wird, ist eine exakte Temperaturführung, Verteilung und Vermischung des behandelten Kühlschmierstoffgemischs im Bereitstellungsbehälter von großer Bedeutung. Durch ein darauffolgendes beruhigtes Durchströmen des Bereitstellungsbehälters kann die notwendige Entgasung und Fremdölabscheidung konstruktiv einfach erreicht werden.

Sollte die Strömungsgeschwindigkeit in diesem Bereich des Bereitstellungsbehälters abnormal reduziert sein, kann die Vermischung des betriebsbereiten Kühlschmierstoffgemischs vorzugsweise durch Rührwerke oder dergleichen aufrecht erhalten werden.

Insbesondere auch aufgrund von im Bereitstellungsbehälter durch entsprechende Mengenbilanz gezielt eingestellten Strömungsverhältnissen kann sich insbesondere das abzuscheidende Fremdöl auf der Badoberfläche absetzen und zur Schmutzkammer strömen, wo es durch eine entsprechend ausgestaltete Skimmereinrichtung abgeschöpft wird.

Die optimale verfahrenstechnische Behandlung des Kühlschmierstoffgemischs kann speziell bei einem Füllgrad von 75 % des Bereitstellungsbehälters gewährleistet werden.

Gegenüberliegend der Schmutzkammer, also vorzugsweise am anderen Ende des Bereitstellungsbehälters, kann das Kühlschmierstoffgemisch bevorzugt durch Kreiselpumpen abgesaugt und mit der richtigen Druckeinstellung wieder dem Walzprozess zugeführt werden.

Die Bilanzierung der umlaufenden Mengen des Kühlschmierstoffgemischs kann wie folgt formuliert sein:
- Anforderung des Walzprozesses an die Menge des Kühlschmierstoffgemischs: 0 - 100 % variabel
- vom Walzprozess in den Behälter zurückfließende Menge des Kühlschmierstoffgemischs: 0 - 100 % variabel
- dem Magnetabscheider zugeführte Menge des Kühlschmierstoffgemischs aus der Schmutzkammer: 110 % konstant
- dem Vakuumfilter zugeführte Menge des Kühlschmierstoffgemischs aus dem Magnetabscheider: 110 % konstant
- von den Filtereinrichtungen in die Reinkammer gelangende Menge des Kühlschmierstoffgemischs: 110 % konstant
- dem Walzprozess wieder zugeführte Menge des Kühlschmierstoffgemischs: 0 - 100% variabel

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Merkmale, Effekte und Vorteile vorliegender Erfindung werden anhand anliegender Zeichnung und nachfolgender Beschreibung erläutert, in welchen beispielhaft eine Vorrichtung zum Erzeugen und Aufbereiten eines Kühlschmierstoffgemischs für eine Umformvorrichtung in einem Umformwerk dargestellt und beschrieben ist.

In der Zeichnung zeigen:
- Figur 1: schematisch eine perspektivische Ansicht einer zweietagigen und modular aufgebauten Vorrichtung zum Erzeugen und Aufbereiten eines Kühlschmierstoffgemischs; und
- Figur 2: schematisch ein Fluidschaltbild der in der Figur 1 gezeigten Vorrichtung.

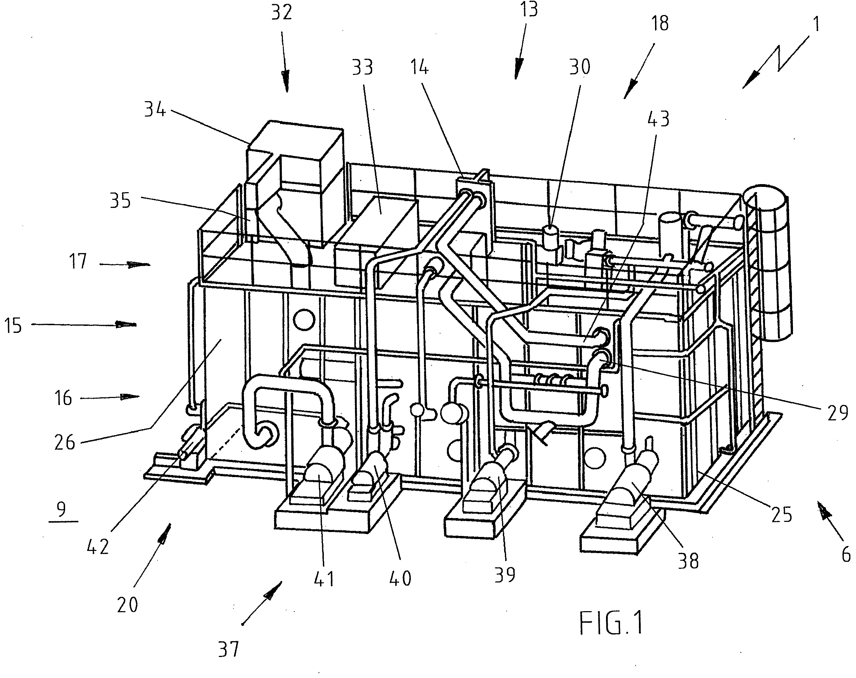

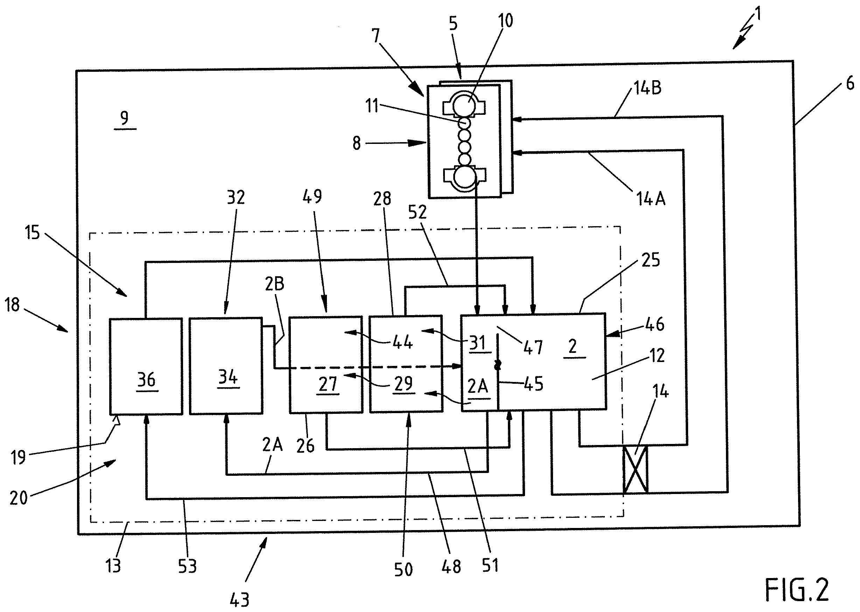

Mit der in den Figuren 1 und 2 schematisch dargestellten Vorrichtung 1 zum Erzeugen und Aufbereiten eines betriebsbereiten Kühlschmierstoffgemischs 2 (siehe Figur 2) wird das betriebsbereiten Kühlschmierstoffgemisch 2 für eine Umformvorrichtung 5 (siehe Figur 2) eines Umformwerks 6 gemischt.

Die Umformvorrichtung 5 verfügt über Umformwerkzeuge 7, mittels welchen ein Werkstück bzw. ein Halbzeug (nicht gezeigt) in einem entsprechende Arbeitsbereich 8 umgeformt werden kann. Genauer gesagt, das Material, aus welchem das Werkstück bzw. das Halbzeug besteht, wird in dem Arbeitsbereich 8 der Umformvorrichtung 5 bearbeitetet und somit umgeformt.

Bei dem Umformwerk 6, welches mithilfe der vorliegenden Vorrichtung 1 mit dem Kühlschmierstoffgemisch 2 versorgt wird, handelt es sich im Speziellen um ein Walzwerk 9; dementsprechend handelt es sich bei der Umformvorrichtung 5 um eine Walzvorrichtung 10 zum Walzen insbesondere eines Materialstreifens bzw. -bandes (nicht gezeigt). Hierzu verfügt die Umformvorrichtung 5 bzw. die Walzvorrichtung 10 in ihrem Arbeitsbereich 8 über eine Vielzahl an mit dem Materialstreifen bzw. -band wechselwirkenden Walzen 11 (nur exemplarisch beziffert).

Bei dem Kühlschmierstoffgemisch 2 handelt es sich in diesem Ausführungsbeispiel um eine Walzemulsion 12, mittels welcher am Arbeitsbereich 8 einerseits das Halbzeug und die hiermit wechselwirkenden Walzen 11 geschmiert und andererseits insbesondere die Walzen 11 gekühlt werden. Insofern ist die hier gezeigte Vorrichtung 1 speziell als eine Emulsionsanlage 13 ausgelegt.

Die Umformvorrichtung 5 bzw. die Walzvorrichtung 10 ist fluidisch an einer Anschlusseinrichtung 14 der Vorrichtung 1 angeschlossen, wobei von dieser Anschlusseinrichtung 14 eine Walzenkühlleitung 14A und eine Walzenschmierleitung 14B zu der Umformvorrichtung 5 bzw. zu der Walzvorrichtung 10 führt.

Die hier gezeigte Vorrichtung 1 zeichnet sich insbesondere durch eine modular aufgebaute Containereinheit 15 aus, welche zumindest in diesem Ausführungsbeispiel zwei Etagen 16 und 17 umfasst, auf welchen die unterschiedlichsten Komponenten 18 der Vorrichtung 1 verteilt angeordnet sind.

Die modular aufgebaute Containereinheit 15 stellt eine Vielzahl an Modulplätzen 19 bereit, die derart ausgestaltet sind, dass jede der Komponenten 18 passgenau nur an dem jeweils vorgesehenen Modulplatz 19 montiert werden kann. Insofern kann die Vorrichtung 1 wesentlich schneller zusammengebaut werden.

Aufgrund ihres modularen Aufbaus 20 kann eine schnelle und fehlerfreie Montage der einzelnen Komponenten 18 zueinander selbst durch ungeschultes Personal erfolgen.

Die Vorrichtung 1 zeichnet sich insbesondere durch einen Bereitstellungsbehälter 25 zum Bereitstellen des betriebsbereiten Kühlschmierstoffgemischs 2, durch einen Grundölbevorratungsbehälter 26 zum Bevorraten von Grundöl 27 und durch einen Wasserbevorratungsbehälter 28 zum Bevorraten von Wasser 29 aus, wobei das betriebsbereite Kühlschmierstoffgemisch 2 insbesondere durch ein Vermischen des Grundöls 27 mit dem Wasser 29 in einer Rühr- bzw. Mischeinrichtung 30 erzeugt wird.

Daneben weist die Vorrichtung 1 noch einen Auffangbehälter 31 zum temporären Sammeln bzw. Weiterleiten von aus dem Arbeitsbereich 8 zurückkommendem und gebrauchtem Kühlschmierstoffgemisch 2A auf.

Ferner umfasst die Vorrichtung 1 noch eine Aufbereitungseinrichtung 32 zum Aufbereiten bzw. zum Filtern und zum Reinigen des von dem Arbeitsbereich 8 zurückkommenden Kühlschmierstoffgemischs 2A, wobei die Aufbereitungseinrichtung 32 insbesondere eine Abschöpfeinheit 33, eine Magnetabscheidereinheit 34 sowie einen Magnetabscheidertank 35 aufweist.

Außerdem verfügt die Vorrichtung 1 noch über eine Heiz- und/oder Kühleinrichtung 36 zum Heizen bzw. Kühlen des sich in dem Bereitstellungsbehälter 25 befindlichen betriebsbereiten Kühlschmierstoffgemischs 2.

Neben der Containereinheit 15 sind auf Höhe der unteren Etage 16 noch einige Nebenaggregate 37 platziert, von denen beispielhaft zwei Förderpumpen 38 und 39 zum Fördern des betriebsbereiten Kühlschmierstoffgemischs 2, eine Heizeinrichtungspumpe 40, eine Filterpumpe 41 und eine Grundölpumpe 42 zu sehen sind.

Es versteht sich, dass insbesondere die vorgenannten Komponenten 18 der Vorrichtung 1 durch eine entsprechend verlegte Verrohrung 43 untereinander fluidisch verbunden sind, wobei diese Verrohrung 43 aufgrund der zweietagigen und somit äußerst kompakt bauenden Containereinheit 15 ebenfalls sehr kompakt baut.

Mittels der so aufgebauten Vorrichtung 1 kann ein besonders energieeffektives Verfahren zum Erzeugen des Kühlschmierstoffgemischs 2 zum Kühlen und Schmieren des Arbeitsbereichs 8 der Umformvorrichtung 5 durchgeführt werden, bei welchem das betriebsbereite Kühlschmierstoffgemisch 2 aus wenigstens zwei Flüssigkeiten, nämlich dem Grundöl 27 und dem Wasser 29, gemischt wird, und bei welchem wenigstens eine der Flüssigkeiten vor dem Vermischen mit der anderen der Flüssigkeiten vorgewärmt wird, wobei zum Vorwärmen der wenigstens einen der Flüssigkeiten eine dem gebrauchten Kühlschmierstoffgemisch 2 innewohnende Wärmeenergie 44 (nur exemplarisch angedeutet und beziffert, siehe Figur 2) zumindest teilweise an die wenigstens eine der Flüssigkeiten übertragen wird.

In dem vorliegenden Ausführungsbeispiel wird die dem gebrauchten Kühlschmierstoffgemisch 2A innewohnende Wärmeenergie 44 sowohl an das Grundöl 27 als auch an das Wasser 29 übertragen, und zwar in der Art, dass auf weitere Heizungseinheiten zum Aufheizen des Grundöls 27 und des Wassers 29 verzichtet werden kann.

Darüber hinaus ist die Vorrichtung 1 bzw. die Anordnung des Bevorratungsbehälters 25 und des Auffangbehälters 31 derart arrangiert, dass die dem gebrauchten Kühlschmierstoffgemisch 2A innewohnende Wärmeenergie 44 zumindest teilweise an das in dem Bereitstellungsbehälter 25 vorgehaltene betriebsbereite Kühlschmierstoffgemisch 2 übertragen wird.

Wie gemäß der Darstellung nach der Figur 2 gut erkennbar ist, weisen der Auffangbehälter 31 und der Bereitstellungsbehälter 25 hierzu eine gemeinsame Trennwand 45 auf, durch welche hindurch die dem gebrauchten Kühlschmierstoffgemisch 2A innewohnende Wärmeenergie 44 an das betriebsbereite Kühlschmierstoffgemisch 2 übertragen wird, so dass der Auffangbehälter 31 und der Bereitstellungsbehälter 25 gemeinsam einen Wärmeübertrager 46 bilden, mittels welchem die dem gebrauchten Kühlschmierstoffgemisch 2A innewohnende Wärmeenergie 44 an das betriebsbereite Kühlschmierstoffgemisch 2 übertragbar ist.

Vorteilhafterweise sind darüber hinaus auch der Grundölbevorratungsbehälter 26 und der Wasserbevorratungsbehälter 28 derart zueinander und zu dem Auffangbehälter 31, aber auch zu dem Bereitstellungsbehälter 25, angeordnet, dass die dem gebrauchten Kühlschmierstoffgemisch 2A innewohnende Wärmeenergie 44 an das in dem Grundölbevorratungsbehälter 26 bevorratete Grundöl 27 und an das in dem Wasserbevorratungsbehälter 28 bevorratete Wasser 29 übertragbar ist.

Neben einem Überlauf 47 sind der Auffangbehälter 31 und der Bereitstellungsbehälter 25 noch mittels einer Kühlschmierstoffgemisch-Leitung 48 fluidisch miteinander verbunden sind, wobei in dieser Kühlschmierstoffgemisch-Leitung 48 die Aufbereitungseinrichtung 32 fluidisch integriert ist.

Die Kühlschmierstoffgemisch-Leitung 48 ist mit dem Grundölbevorratungsbehälter 26 und dem Wasserbevorratungsbehälter 28 derart wirkverbunden, dass die dem gebrauchten Kühlschmierstoffgemisch 2A bzw. dem aufbereiteten Kühlschmierstoffgemisch 2B innewohnende Wärmeenergie 44 zumindest teilweise an das in dem Grundölbevorratungsbehälter 26 bevorratete Grundöl 27 und an das in dem Wasserbevorratungsbehälter 28 bevorratete Wasser 29 übertragbar ist.

Vorliegend bildet also ein erster Abschnitt der Kühlschmierstoffgemisch-Leitung 48 mit dem Grundölbevorratungsbehälter 26 einen weiteren Wärmeübertrager 49 der Vorrichtung 1 und ein weiterer Abschnitt der Kühlschmierstoffgemisch-Leitung 48 mit dem Wasserbevorratungsbehälter 28 noch einen anderen Wärmeübertrager 50 der Vorrichtung 1.

Das so vorgewärmte Grundöl 27 kann der Rühr- bzw. Mischeinrichtung 30 bzw. dem Bereitstellungsbehälter 25 mittels einer Grundölleitung 51 zugeleitet werden, während das vorgewärmte Wasser 29 der Rühr- bzw. Mischeinrichtung 30 bzw. dem Bereitstellungsbehälter 25 mittels einer Wasserleitung 52 zugeleitet wird.

Die Heizeinrichtung 36 ist in einem Kühlschmierstoffgemisch-Heiz- kühlkreislauf 53 integriert, in welchem das betriebsbereite Kühlschmierstoffgemisch 2 umgewälzt wird, falls es erforderlich sein sollte, dieses zusätzlich zu erwärmen oder zu kühlen.

Ist es nicht erforderlich das in dem Bereitstellungsbehälter 25 vorgehaltene betriebsbereite Kühlschmierstoffgemisch 2 durch die dem gebrauchten Kühlschmierstoffgemisch 2A innewohnende Wärmeenergie zu erwärmen, so kann das gebrauchte Kühlschmierstoffgemisch 2A beispielsweise über einen hier nicht gezeigten Bypass an dem Auffangbehälter 31 vorbei geleitet werden, so dass die dem gebrauchten Kühlschmierstoffgemisch 2A innewohnende Wärmeenergie im Wesentlich zur Gänze an dem Grundölbevorratungsbehälter 26 und/oder dem Wasserbevorratungsbehälter 28 zur Verfügung stehen kann.

An dieser Stelle sei explizit darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei dem vorstehend erläuterten Ausführungsbeispiel lediglich um eine erste Ausgestaltung der erfindungsgemäßen Vorrichtung zum Erzeugen und Aufbereiten von Kühlschmierstoffgemischen handelt. Insofern beschränkt sich die Ausgestaltung der Erfindung nicht auf dieses Ausführungsbeispiel.

### Bezugszeichenliste:

- 1: Vorrichtung
- 2: Kühlschmierstoffgemisch
- 2A: gebrauchtes Kühlschmierstoffgemisch
- 2B: gebrauchtes und aufbereitetes Kühlschmierstoffgemisch
- 5: Umformvorrichtung
- 6: Umformwerk
- 7: Umformwerkzeuge
- 8: Arbeitsbereich
- 9: Walzwerk
- 10: Walzvorrichtung
- 11: Walzen
- 12: Walzemulsion
- 13: Emulsionsanlage
- 14: Anschlusseinrichtung
- 14A: Walzenkühlleitung
- 14B: Walzenschmierleitung
- 15: Containereinheit
- 16: untere Etage
- 17: obere Etage
- 18: Komponenten
- 19: Modulplätze
- 20: modularer Aufbau
- 25: Bereitstellungsbehälter
- 26: Grundölbevorratungsbehälter
- 27: Grundöl
- 28: Wasserbevorratungsbehälter
- 29: Wasser
- 30: Rühr- bzw. Mischeinrichtung
- 31: Auffangbehälter
- 32: Aufbereitungseinrichtung
- 33: Abschöpfeinheit
- 34: Magnetabscheidereinheit
- 35: Magnetabscheidertank
- 36: Heiz- und/oder Kühleinrichtung
- 37: Nebenaggregate
- 38: erste Förderpumpe
- 39: zweite Förderpumpe
- 40: Heizeinrichtungspumpe
- 41: Filterpumpe
- 42: Grundölpumpe
- 43: Verrohrung
- 44: Wärmeenergie
- 45: gemeinsame Trennwand
- 46: Wärmeübertrager
- 47: Überlauf
- 48: Kühlschmierstoffgemisch-Leitung
- 49: weiterer Wärmeübertrager
- 50: anderer Wärmeübertrager
- 51: Grundölleitung
- 52: Wasserleitung
- 53: Kühlschmierstoffgemisch-Heiz- und/oder -kühlkreislauf

## Patentansprüche

1. Verfahren zum Erzeugen eines Kühlschmierstoffgemischs (2) zum Kühlen und Schmieren eines Arbeitsbereichs (8) einer Umformvorrichtung (5) zum Umformen von Halbzeugen, insbesondere zum Kühlen und Schmieren von Halbzeugen und Umformwerkzeugen, bei welchem das Kühlschmierstoffgemisch (2) aus wenigstens zwei Flüssigkeiten (27, 29) gemischt wird und bei welchem wenigstens eine der Flüssigkeiten (27, 29) vor dem Vermischen mit der anderen der Flüssigkeiten (27, 29) vorgewärmt wird, ***dadurch gekennzeichnet, dass*** vor dem Vermischen dieser wenigstens zwei Flüssigkeiten (27, 29) zum Vorwärmen der wenigstens einen der Flüssigkeiten (27, 29) eine einem gebrauchten Kühlschmierstoffgemisch (2A) innewohnende Wärmeenergie (44) zumindest teilweise an die wenigstens eine der Flüssigkeiten (27, 29) übertragen wird.

2. Verfahren nach Anspruch 1, ***dadurch gekennzeichnet, dass*** das Kühlschmierstoffgemisch (2) aus einem Grundöl (27) und Wasser (29) gemischt wird, wobei die dem gebrauchten Kühlschmierstoffgemisch (2A) innewohnende Wärmeenergie (44) zumindest teilweise an das Wasser (29) und/oder an das Grundöl (27) übertragen wird.

3. Verfahren nach Anspruch 1 oder 2, ***dadurch gekennzeichnet, dass*** die dem gebrauchten Kühlschmierstoffgemisch (2A) innewohnende Wärmeenergie (44) zumindest teilweise an ein in einem Bereitstellungsbehälter (25) vorgehaltenen betriebsbereiten Kühlschmierstoffgemisch (2) übertragen wird.

4. Verfahren nach einem der Ansprüche 1 bis 3, ***dadurch gekennzeichnet, dass*** Flüssigkeiten (27, 29) zum Mischen des betriebsbereiten Kühlschmierstoffgemischs (2) und/oder das betriebsbereite Kühlschmierstoffgemisch (2) selbst unterschiedlich erwärmt werden.

5. Verfahren nach einem der Ansprüche 1 bis 4, ***dadurch gekennzeichnet, dass*** eine Übertragung der dem gebrauchten Kühlschmierstoffgemisch (2A) innewohnenden Wärmeenergie (44) nach einer Aufbereitung des gebrauchten Kühlschmierstoffgemischs (2A) erfolgt.

6. Verfahren nach einem der Ansprüche 1 bis 5, ***dadurch gekennzeichnet, dass*** Flüssigkeiten (27, 29) zum Mischen des betriebsbereiten Kühlschmierstoffgemischs (2) und/oder das betriebsbereite Kühlschmierstoffgemisch (2) selbst ausschließlich mittels der dem gebrauchten Kühlschmierstoffgemisch (2A) innewohnenden Wärmeenergie (44) erwärmt wird.

7. Vorrichtung (1) zum Erzeugen eines Kühlschmierstoffgemischs (2), insbesondere Emulsionsanlage (12), zum Kühlen und Schmieren eines Arbeitsbereichs (8) einer Umformvorrichtung (10) zum Umformen von Halbzeugen mit einem Bereitstellungsbehälter (25) zum Bereitstellen von betriebsbereitem Kühlschmierstoffgemisch (2), mit einem Grundölbevorratungsbehälter (26), mit einem Wasserbevorratungsbehälter(28) und mit einem Auffangbehälter (31) zum temporären Sammeln von gebrauchtem Kühlschmierstoffgemisch (2A), wobei der Auffangbehälter (31) mit dem Bereitstellungsbehälter (25) derart in Wirkverbindung steht, dass während der Verweildauer des den Auffangbehälter (31) durchströmenden gebrauchten Kühlschmierstoffgemischs (2A) die dem gebrauchten Kühlschmierstoffgemisch (2A) innewohnende Wärmeenergie (44) zumindest teilweise an das in dem Bereitstellungsbehälter (25) befindliche betriebsbereite Kühlschmierstoffgemisch (2) übertragbar ist, ***dadurch gekennzeichnet, dass*** der Auffangbehälter (31) und der Grundölbevorratungsbehälter (26) und/oder der Wasserbevorratungsbehälter (28) derart zueinander angeordnet sind, dass die dem gebrauchten Kühlschmierstoffgemisch (2A) innewohnende Wärmeenergie (44) an das in dem Grundölbevorratungsbehälter (26) bevorratete Grundöl (27) und/oder an das in dem Wasserbevorratungsbehälter (28) bevorratete Wasser (29) übertragbar ist.

8. Vorrichtung (1) nach Anspruch 7, ***dadurch gekennzeichnet, dass*** der Auffangbehälter (31) und der Bereitstellungsbehälter (25) mittels einer Kühlschmierstoffgemisch-Leitung (48) fluidisch miteinander verbunden sind, wobei in dieser Kühlschmierstoffgemisch-Leitung (48) eine Aufbereitungseinrichtung (32) fluidisch integriert ist, und wobei diese Kühlschmierstoffgemisch-Leitung (48) derart mit dem Grundölbevorratungsbehälter (26) und/oder mit dem Wasserbevorratungsbehälter (28) wirkverbunden ist, dass die dem gebrauchten und/oder dem aufbereiteten Kühlschmierstoffgemisch (2A; 2B) innewohnende Wärmeenergie (44) zumindest teilweise an das in dem Grund-ölbevorratungsbehälter (26) bevorratete Grundöl (27) und/oder an das in dem Wasserbevorratungsbehälter (28) bevorratete Wasser (29) übertragbar ist.

9. Vorrichtung (1) nach einem Anspruch 8, ***dadurch gekennzeichnet, dass*** die Kühlschmierstoffgemisch-Leitung (48) durch den Grundölbevorratungsbehälter (26) und/oder den Wasserbevorratungsbehälter (28) hindurch geführt ist.

10. Vorrichtung (1) nach Anspruch 8 oder 9, ***dadurch gekennzeichnet, dass*** die Kühlschmierstoffgemisch-Leitung (48) und der Grundölbevorratungsbehälter (26) und/oder der Wasserbevorratungsbehälter (28) zumindest noch einen weiteren Wärmeübertrager (49, 50) der Vorrichtung (1) ausgestalten, mittels welchem die dem gebrauchten Kühlschmierstoffgemisch (2A) innewohnende Wärmeenergie (44) an das Grundöl (27) und/oder an das Wasser (29) übertragbar ist.

11. Vorrichtung (1) nach einem der Ansprüche 7 bis 10, ***dadurch gekennzeichnet, dass*** der Grundölbevorratungsbehälter (26) und/oder der Wasserbevorratungsbehälter (28) fluidisch zwischen der Aufbereitungseinrichtung (32) und dem Bereitstellungsbehälter (25) angeordnet ist.

12. Vorrichtung (1) nach einem der Ansprüche 7 bis 11, ***dadurch gekennzeichnet, dass*** die Vorrichtung (1) eine Heiz- und/oder Kühleinrichtung (36) zum Heizen oder Kühlen des sich in dem Bereitstellungsbehälter (25) befindlichen betriebsbereiten Kühlschmierstoffgemischs (2) umfasst.

13. Vorrichtung nach Anspruch 12, ***dadurch gekennzeichnet, dass*** die Vorrichtung (1) einen weiteren Kühlschmierstoffgemisch-Heiz- und/oder Kühlkreislauf (53) aufweist, mittels welchem das in dem Bereitstellungsbehälter (25) befindliche betriebsbereite Kühlschmierstoffgemisch (2) durch die Heiz- und/oder Kühleinrichtung (36) hindurch umwälzbar ist.

14. Vorrichtung (1) nach einem der Ansprüche 7 bis 13, ***dadurch gekennzeichnet, dass*** Komponenten (18) der Vorrichtung (1) zueinander derart angeordnet sind, dass eine durch von den Komponenten (18) der Vorrichtung (1) abgegebene Abwärmeenergie an das Kühlschmierstoffgemisch (2) und/oder Bestandteile (27, 29) hiervon übertragbar ist, so dass das Kühlschmierstoffgemisch (2) und/oder die Bestandteile (27, 29) hiervon erwärmt werden.

15. Vorrichtung (1) nach einem der Ansprüche 7 bis 14, ***dadurch gekennzeichnet, dass*** der Bereitstellungsbehälter (25), der Auffangbehälter (31), der Grundölbevorratungsbehälter (26) und/oder der Wasserbevorratungsbehälter (28) als in Wirkverbindung stehende Kammern einer einzigen übergeordneten Behältniseinrichtung ausgestaltet sein, so dass eine Wärmeenergie (44) kumulativ oder alternativ intensiviert werden kann.

16. Vorrichtung (1) nach einem der Ansprüche 7 bis 15, ***dadurch gekennzeichnet, dass*** die Vorrichtung (1) drehzahlgeregelte Pumpen (38, 39, 40, 41, 42) zur bedarfsgerechten Förderung aufweist.

17. Vorrichtung (1) nach einem der Ansprüche 7 bis 16, ***dadurch gekennzeichnet, dass*** die Vorrichtung (1) eine Containereinheit (15) mit zumindest zwei Etagen (16, 17) aufweist, so dass die Komponenten (18) der Vorrichtung (1) auf wenigstens zwei Ebenen (16, 17) angeordnet sind.

18. Vorrichtung (1) nach einem der Ansprüche 7 bis 17, ***dadurch gekennzeichnet, dass*** die Vorrichtung (1) einen modularen Aufbau (20) aufweist.

19. Vorrichtung (1) nach Anspruch 18, ***dadurch gekennzeichnet, dass*** die Vorrichtung (1) eine Vielzahl an Modulplätzen (19) aufweist, an welchen die Komponenten (18) der Vorrichtung (1) passgenau montierbar sind.

20. Umformwerk (6) zum Umformen von Halbzeugen, insbesondere Walzwerk (9), mit einer Umformvorrichtung (5) zum Umformen der Halbzeuge und mit einer Vorrichtung (1) zum Erzeugen eines Kühlschmierstoffgemischs (2), ***gekennzeichnet durch*** eine Vorrichtung (1) zum Erzeugen eines Kühlschmierstoffgemischs (2) nach einem der vorhergehenden Ansprüche 7-19.

## Claims

1. Method of producing a cooling lubricant mixture (2) for cooling and lubricating a work region (8) of a reshaping device (5) for reshaping semi-finished products, particularly for cooling and lubricating semi-finished products and reshaping tools, in which the cooling lubricant mixture (2) is mixed from at least two liquids (27, 29) and in which at least one of the liquids (27, 29) is preheated before mixing with the other one of the liquids (27, 29), **characterised in that** prior to mixing these at least two liquids (27, 29) a heat energy (44) intrinsic to a used cooling lubricant mixture (2A) is transferred at least partly to the at least one of the liquids (27, 29) for preheating the at least one of the liquids (27, 29).

2. Method according to claim 1, **characterised in that** the cooling lubricant mixture (2) is mixed from a base oil (27) and water (29), wherein the heat energy (44) intrinsic to the used cooling lubricant mixture (2A) is transferred at least partly to the water (29) and/or to the base oil (27).

3. Method according to claim 1 or 2, **characterised in that** the heat energy (44) intrinsic to the used cooling lubricant mixture (2A) is transferred at least partly to a ready-to-use cooling lubricant mixture (2) kept in reserve in a supply container (25).

4. Method according to any one of claims 1 to 3, **characterised in that** liquids (27, 29) for mixing the ready-to-use cooling lubricant mixture (2) and/or the ready-to-use cooling lubricant mixture (2) itself is or are differently heated.

5. Method according to any one of claims 1 to 4, **characterised in that** transfer of the heat energy (44) intrinsic to the used cooling lubricant mixture (2A) is carried out after preparation of the used cooling lubricant mixture (2A).

6. Method according to any one of claims 1 to 5, **characterised in that** liquids (27, 29) for the mixing of the ready-to-use cooling lubricant mixture (2) and/or the ready-to-use cooling lubricant mixture (2) itself is or are heated exclusively by means of the heat energy (44) intrinsic to the used cooling lubricant mixture (2A).

7. Device (1) for producing a cooling lubricant mixture (2), particularly an emulsion plant (12), for cooling and lubricating a work region (8) of a reshaping device (10) for reshaping semi-finished products, comprising a supply container (25) for supplying ready-to-use cooling lubricant mixture (2), a base oil reserve container (26), a water reserve container (28), and a collecting container (31) for temporary collection of used cooling lubricant mixture (2A), wherein the collecting container (31) is so operatively connected with the supply container (25) that during the dwell time of the used cooling lubricant mixture (2A) flowing through the collecting container (31) the heat energy (44) intrinsic to the used cooling lubricant mixture (2A) is transferrable at least partly to the ready-to-use cooling lubricant mixture (2) present in the supply container (25), **characterised in that** the collecting container (31) and the base oil reserve container (26) and/or the water reserve container (28) are so arranged relative to one another that the heat energy (44) intrinsic to the used cooling lubricant mixture (2A) is transferrable to the base oil (27) stored in the base oil reserve container (26) and/or to the water (29) stored in the water reserve container (28).

8. Device (1) according to claim 7, **characterised in that** the collecting container (31) and the supply container (25) are disposed in fluid connection with one another by means of a cooling lubricant mixture duct (48), wherein a preparation device (32) is integrated in terms of fluid in this cooling lubricant mixture duct (48) and wherein this cooling lubricant mixture duct (48) is so operatively connected with the base oil reserve container (26) and/or with the water reserve container (28) that the heat energy (44) intrinsic to the used and/or the prepared cooling lubricant mixture (2A, 2B) is transferrable at least partly to the base oil (27) stored in the base oil reserve container (26) and/or to the water (29) stored in the water reserve container (28).

9. Device (1) according to claim 8, **characterised in that** the cooling lubricant mixture duct (48) is led through the base oil reserve container (26) and/or the water reserve container (28).

10. Device (1) according to claim 8 or 9, **characterised in that** the cooling lubricant mixture duct (48) and the base oil reserve container (26) and/or the water reserve container (28) form at least one further heat transfer means (49, 50) of the device (1), by means of which the heat energy (44) intrinsic to the used cooling lubricant mixture (2A) is transferrable to the base oil (27) and/or to the water (29).

11. Device (1) according to any one of claims 7 to 10, **characterised in that** the base oil reserve container (26) and/or the water reserve container (26) is or are arranged in terms of fluid between the preparation device (32) and the supply container (25).

12. Device (1) according to any one of claims 7 to 11, **characterised in that** the device (1) comprises a heating and/or cooling device (36) for heating or cooling the ready-to-use cooling lubricant mixture (2) present in the supply container (25).

13. Device according to claim 12, **characterised in that** the device (1) comprises a further cooling lubricant mixture heating and/or cooling circuit (53), by means of which the ready-to-use cooling lubricant mixture (2) present in the supply container (25) can be circulated through the heating and/or cooling device (36).

14. Device (1) according to any one of claims 7 to 13, **characterised in that** components (18) of the device (1) are so arranged relative to one another that a waste heat energy delivered by the components (18) of the device (1) is transferrable to the cooling lubricant mixture (2) and/or components (27, 29) thereof so that the cooling lubricant mixture (2) and/or the components (27, 29) thereof are heated.

15. Device (1) according to any one of claims 7 to 14, **characterised in that** the supply container (25), the collecting container (31), the base oil reserve container (26) and/or the water reserve container (28) are formed as operatively connected chambers of a single superordinate containing device so that a heat energy (44) can be cumulatively or alternatively intensified.

16. Device (1) according to any one of claims 7 to 15, **characterised in that** the device (1) comprises pumps (38, 39, 40, 41, 42), which are regulated in rotational speed, for conveying appropriately to need.

17. Device (1) according to any one of claims 7 to 16, **characterised in that** the device (1) comprises a container unit (15) with at least two levels (16, 17) so that the components (18) of the device (1) are arranged on at least two planes (16, 17).

18. Device (1) according to any one of claims 7 to 17, **characterised in that** the device (1) has a modular construction (20).

19. Device (1) according to claim 18, **characterised in that** the device (1) has a plurality of module places (19) at which the components (18) of the device (1) are mountable with precise fit.

20. Reshaping installation (6) for reshaping semi-finished products, particularly rolling mill (9), comprising a reshaping device (5) for reshaping the semi-finished products and a device (1) for producing a cooling lubricant mixture (2), **characterised by** a device (1) according to any one of the preceding claims 7 to 19 for producing a cooling lubricant mixture (2).

## Revendications

1. Procédé destiné à générer un mélange (2) d'un agent de refroidissement et d'un lubrifiant pour le refroidissement et la lubrification d'une zone de travail (8) d'un dispositif de mise en forme (5) destiné à la mise en forme de produits semi-finis, en particulier destiné au refroidissement et à la lubrification de produits semi-finis et d'outils de mise en forme, dans lequel on prépare le mélange (2) d'un agent de refroidissement et d'un lubrifiant à partir d'au moins deux liquides (27, 29) et dans lequel on soumet au moins un des liquides (27, 29) à un réchauffement préalable avant de procéder à son mélange avec l'autre liquide choisi parmi les liquides (27, 29), **caractérisé en ce que**, avant de procéder au mélange desdits au moins deux liquides (27, 29), à des fins de chauffage préalable dudit au moins un des liquides (27, 29), on transfère au moins en partie audit au moins un des liquides (27, 29) une énergie thermique inhérente à un mélange utilisé (2A) d'un agent de refroidissement et d'un lubrifiant.

2. Procédé selon la revendication 1, **caractérisé en ce que** l'on prépare le mélange (2) d'un agent de refroidissement et d'un lubrifiant à partir d'une huile de base (27) et à partir d'eau (29) ; dans lequel l'énergie thermique (44) inhérente au mélange utilisé (2A) d'un agent de refroidissement et d'un lubrifiant est transférée au moins en partie à l'eau (29) et/ou à l'huile de base (27).

3. Procédé selon la revendication 1 ou 2, **caractérisé en ce que** l'énergie thermique (44) inhérente au mélange utilisé (2A) d'un agent de refroidissement et d'un lubrifiant est transférée au moins en partie à un mélange (2) d'un agent de refroidissement et d'un lubrifiant prêt à l'emploi, mis en réserve dans un récipient de mise à disposition (25).

4. Procédé selon l'une quelconque des revendications 1 à 3, **caractérisé en ce que** l'on réchauffe de manière différente les liquides (27, 29) pour la préparation du mélange (2) d'un agent de refroidissement et d'un lubrifiant et/ou le mélange (2) lui-même prêt à l'emploi d'un agent de refroidissement et d'un lubrifiant.

5. Procédé selon l'une quelconque des revendications 1 à 4, **caractérisé en ce qu'**un transfert de l'énergie thermique (44) inhérente au mélange utilisé (2A) d'un agent de refroidissement et d'un lubrifiant a lieu après un traitement du mélange utilisé (2A) d'un agent de refroidissement et d'un lubrifiant.

6. Procédé selon l'une quelconque des revendications 1 à 5, **caractérisé en ce que** l'on réchauffe les liquides (27, 29) pour la préparation du mélange (2) prêt à l'emploi d'un agent de refroidissement et d'un lubrifiant et/ou le mélange (2) lui-même prêt à l'emploi d'un agent de refroidissement et d'un lubrifiant de manière exclusive au moyen de l'énergie thermique inhérente au mélange utilisé (2A) d'un agent de refroidissement et d'un lubrifiant.

7. Dispositif (1) destiné à la génération un mélange (2) d'un agent de refroidissement et d'un lubrifiant, en particulier installation d'émulsion (12), pour destiné au refroidissement et à la lubrification d'une zone de travail (8) d'un dispositif de mise en forme (10) destiné à la mise en forme de produits semi-finis, comprenant : un récipient de mise à disposition (25) destiné à la mise à disposition d'un mélange (2) prêt à l'emploi d'un agent de refroidissement et d'un lubrifiant ; un récipient (26) de mise en réserve d'une huile de base ; un récipient (28) de mise en réserve de l'eau ; et,un récipient de récupération (31) pour la récolte temporaire du mélange utilisé (2A) d'un agent de refroidissement et d'un lubrifiant; dans lequel le récipient de récupération (31) est mis en liaison active avec le récipient de mise à disposition (25) d'une manière telle qu'au cours de la durée de séjour du mélange utilisé (2A) d'un agent de refroidissement et d'un lubrifiant qui s'écoule à travers le récipient de récupération (31), l'énergie thermique (44) inhérente au mélange utilisé (2A) d'un agent de refroidissement et d'un lubrifiant peut être transférée au moins en partie au mélange (2) prêt à l'emploi d'un agent de refroidissement et d'un lubrifiant qui se trouve dans le récipient de mise à disposition (25) ; **caractérisé en ce que** le récipient de récupération (31) et le récipient (26) de mise en réserve de l'huile de base et/ou le récipient (28) de mise en réserve de l'eau sont disposés l'un par rapportà l'autre d'une manière telle que l'énergie thermique (44) inhérente au mélange utilisé (2A) d'un agent de refroidissement et d'un lubrifiant peut être transférée à l'huile de base (27) mise en réserve dans le récipient (26) de mise en réserve de l'huile de base et/ou à l'eau (29) mise en réserve dans le récipient (28) de mise en réserve de l'eau.

8. Dispositif (1) selon la revendication 7, **caractérisé en ce que** le récipient de récupération (31) et le récipient (25) de mise à disposition sont reliés l'un à l'autre par fluide au moyen d'un conduit (48) destiné à un mélange d'un agent de refroidissement et d'un lubrifiant ; dans lequel un mécanisme de traitement (32) est intégré par fluide dans ce conduit (48) destiné à un mélange d'un agent de refroidissement et d'un lubrifiant ; et dans lequel ce conduit (48) destiné à un mélange d'un agent de refroidissement et d'un lubrifiant est mis en liaison active avec le récipient (26) de mise en réserve de l'huile de base et/ou avec le récipient (28) de mise en réserve de l'eau d'une manière telle que l'énergie thermique (44) inhérente au mélange utilisé et/ou traité d'un agent de refroidissement et d'un lubrifiant (2A, 2B) peut être transférée au moins en partie à l'huile de base (27) mise en réserve dans le récipient (26) de mise en réserve de l'huile de base et/ou à l'eau (29) mise en réserve dans le récipient (28) de mise en réserve de l'eau.

9. Dispositif (1) selon la revendication 8, **caractérisé en ce que** le conduit (48) destiné à un mélange d'un agent de refroidissement et d'un lubrifiant est guidé de part en part à travers le récipient (26) de mise en réserve de l'huile de base et/ou à travers le récipient (28) de mise en réserve de l'eau.

10. Dispositif (1) selon la revendication 8 ou 9, **caractérisé en ce que** le conduit (48) destiné à un mélange d'un agent de refroidissement et d'un lubrifiant et le récipient (26) de mise en réserve de l'huile de base et/ou le récipient (28) de mise en réserve de l'eau constituent au moins encore un échangeur de chaleur supplémentaire (49, 50) du dispositif (1), au moyen duquel l'énergie thermique (44) inhérente au mélange utilisé d'un agent de refroidissement et d'un lubrifiant (2A) peut être transférée à l'huile de base (27) et/ou à l'eau (29).

11. Dispositif (1) selon l'une quelconque des revendications 7 à 10, **caractérisé en ce que** le récipient (26) de mise en réserve de l'huile de base et/ou le récipient (28) de mise en réserve de l'eau sont reliés par fluide entre le mécanisme de traitement (32) et le récipient de mise à disposition (25).

12. Dispositif (1) selon l'une quelconque des revendications 7 à 11, **caractérisé en ce que** le dispositif (1) comprend un mécanisme de chauffage et/ou de refroidissement (36) destiné au chauffage au refroidissement du mélange (2) prêt à l'emploi d'un agent de refroidissement et d'un lubrifiant qui se trouve dans le récipient de mise à disposition (25).

13. Dispositif (1) selon la revendication 12, **caractérisé en ce que** le dispositif (1) présente un circuit supplémentaire de chauffage et/ou de refroidissement (53) pour le mélange (2) d'un agent de refroidissement et d'un lubrifiant, au moyen duquel on peut faire circuler le mélange (2) prêt à l'emploi d'un agent de refroidissement et d'un lubrifiant qui se trouve dans le récipient de mise à disposition (25) à travers le mécanisme de chauffage et/ou de refroidissement (36).

14. Dispositif (1) selon l'une quelconque des revendications 7 à 13, **caractérisé en ce que** des composants (18) du dispositif (1) sont disposés les uns par rapport aux autres d'une manière telle qu'une énergie thermique évacuée par les composants (18) du dispositif (1) peut être transférée au mélange (2) d'un agent de refroidissement et d'un lubrifiant et/ou à des constituants (27, 29) de ce dernier, d'une manière telle que l'on réchauffe le mélange (2) d'un agent de refroidissement et d'un lubrifiant et/ou les constituants (27, 29) de ce dernier.

15. Dispositif (1) selon l'une quelconque des revendications 7 à 14, **caractérisé en ce que** le récipient de mise à disposition (25), le récipient de récupération (31), le récipient (26) de mise en réserve d'une huile de base et/ou le récipient (28) de mise en réserve de l'eau sont réalisés sous la forme de chambres mises en liaison active, d'un mécanisme supérieur individuel faisant office de récipient, d'une manière telle qu'une énergie thermique (44) peut faire l'objet d'une intensification de manière cumulative ou de manière alternative.

16. Dispositif (1) selon l'une quelconque des revendications 7 à 15, **caractérisé en ce que** le dispositif (1) présente des pompes (38, 39, 40, 41, 42), dont on peut régler la vitesse de rotation, destinées à fournir une alimentation correspondant à la demande.

17. Dispositif (1) selon l'une quelconque des revendications 7 à 16, **caractérisé en ce que** le dispositif (1) présente une unité (15) faisant office de conteneur comprenant au moins deux étages (16, 17), tant et si bien que les composants (18) du dispositif (1) sont disposés sur au moins deux plans (16, 17).

18. Dispositif (1) selon l'une quelconque des revendications 7 à 17, **caractérisé en ce que** le dispositif (1) présente une structure modulaire (20).

19. Dispositif (1) selon la revendication18, **caractérisé en ce que** le dispositif (1) présente une multitude d'emplacements modulaires (19) sur lesquels peuvent être monté en ajustage serré les composants (18) du dispositif (1).

20. Installation de mise en forme (6) pour la mise en forme de produits semi-finis, en particulier laminoir (9) comprenant un dispositif de mise en forme (5) destiné à la mise en forme des produits semi-finis et comprenant un dispositif (1) destiné à la génération d'un mélange (2) d'un agent de refroidissement et d'un lubrifiant, **caractérisé par** un dispositif (1) destiné à la génération d'un mélange (2) d'un agent de refroidissement et d'un lubrifiant selon l'une quelconque des revendications précédentes 7 à 19.
